# FASCICULE DE BREVET EUROPEEN

(11) **EP 0 255 437 B1**
(45) Date de publication et mention de la délivrance du brevet: **06.10.1993**
(21) Numéro de dépôt: 87401746.0
(22) Date de dépôt: 27.07.1987
(51) Int. Cl.: G01N 21/88, G01N 21/90

(54) **Contrôle de corps transparents**
Inspektion von transparenten Körpern
Inspection of transparent bodies

(30) Priorité: 28.07.1986 FR 8610900
(43) Date de publication de la demande: 03.02.1988
(73) Titulaire: SAINT-GOBAIN CINEMATIQUE ET CONTROLE, 92230 Gennevilliers (FR)
(72) Inventeur: Caloyannis, Théodore, F-92400 Courbevoie (FR); Lamborot, Pierre, F-75019 Paris (FR)
(74) Mandataire: Le Vaguerèse, Sylvain Jacques

(56) Documents cités:
- EP-A- 0 016 551
- EP-A- 0 186 278
- DE-A- 3 145 686
- US-A- 3 987 301
- GLASS TECHNOLOGY, vol. 22, no. 3, juin 1981, pages 139-140, Huddersfield, GB; W. SANDERS: "Solid state optics for sidewall and dimensional inspection of glassware"

## Description

Les procédés modernes de contrôle optique de corps suffisamment transparents analysent électroniquement, étape par étape, les fluctuations ou perturbations d'un signal retransmis par telle zone du corps à partir d'une source lumineuse convenable. Ils sont tout particulièrement employés pour le contrôle d'objets possédant une symétrie axiale au moins partielle, en particulier d'articles en verre, tels que des bouteilles ou verres à boire, ou même en matière plastique.

Une synthèse est ensuite effectuée, en fonction de toutes sortes de critères destinés à faire apparaître la position, l'étendue et surtout l'intensité de chaque défaut mais, en règle générale, si le mode d'analyse ou le mode de synthèse choisis sont liés au mode d'observation, ils n'en dépendent pas directement ; en l'occurrence ils sont extérieurs à l'objet de l'invention et ne seront donc pas étudiés ci-dessous.

Une difficulté importante réside au contraire dans la formation même d'un signal réellement significatif. S'agissant de couvrir des régions assez vastes de l'article, on opère normalement par traversée, colonne par colonne, analysant plus ou moins finement, parallèlement à l'axe, des bandes successives de l'amplitude désirée ; mais c'est avec plus ou moins d'insuccès que nombre de constructions optiques ont été envisagées.

Sur toute une famille récente d'appareils, plutôt que d'observer directement la paroi de cet article, voire l'image qu'il fournit de la source, on intercepte directement le faisceau lumineux projeté par transparence au moyen d'un récepteur de taille adéquate, situé dans un plan relativement peu éloigné. Ce récepteur comprend donc un réseau de détecteurs, qui forme en général une matrice rectangulaire, masqué au plus près par un écran diffusant, translucide ; ce dernier permet de recueillir un maximum de la lumière tout en lissant sa transmission aux détecteurs, indépendamment de la direction des rayons qui le frappent.

Il arrivera que la lumière n'effectue qu'une seule traversée : l'image observée constitue alors en quelque sorte l'ombre d'une zone de la paroi proche de l'écran. Le plus souvent toutefois, elle traverse à deux reprises : l'image répercute alors aussi certains défauts de la paroi la plus éloignée.

Sur ces appareils comme sur d'autres, on préfère généralement, en particulier pour des articles de révolution, opérer en rotation sur un tour complet, à poste fixe ou sur un montage suiveur, le long de méridiennes ou génératrices principales successives : la suite de la description se référera essentiellement à ce type de contrôle. On peut cependant dans certains cas ne travailler qu'au défilé, sous plusieurs angles complémentaires, à la limite sous un seul ; on obtient ainsi une analyse plus sommaire mais plus rapide et qui suffit dans de nombreux cas : la transposition est immédiate.

Enfin les organes de présentation et a priori de mise en rotation sont usuellement associés à une platine horizontale de référence, et l'ensemble des organes optiques de l'appareil seront disposés le long d'un même plan de symétrie du poste, perpendiculaire à la trajectoire de traversée de celui-ci. Les machines les plus courantes utilisant des transporteurs à plateau ou à barillet d'axe vertical, ce plan sera donc un plan vertical passant par l'axe de la machine.

En particulier, outre des organes classiques de présentation du corps au poste de contrôle, le dispositif décrit par la publication de brevet DE-A-3145686 comprend, dans ce plan de symétrie principal du poste de contrôle :
- un récepteur associant une rangée rectiligne serrée d'éléments photosensibles disposée verticalement en regard de la position du corps, à un écran diffusant translucide plan, placé le long de sa face avant à proximité immédiate de ce corps,
- au-delà de l'emplacement du corps, un émetteur de lumière fixe engendrant le long dudit plan de symétrie un faisceau lumineux laser, peu épais mais étalé en forme d'éventail ou de ruban, donc apte à éclairer sur l'écran, de façon suffisamment homogène, une zone étroite couvrant le ou les segments de génératrice choisis pour l'examen.

Sur cet appareil ou d'autres comparables, le réseau se place nécessairement près de l'écran, à une distance du même ordre que la maille de ce dernier, pour que chaque élément détecteur soit essentiellement éclairé par la seule zone de l'écran qui se trouve en face de lui. Pour mieux isoler chaque cellule, il avait même été proposé d'interposer là une grille en nid d'abeilles ; mais cette disposition devient inefficace lorsqu'on veut, comme le propose le texte en question, obtenir une analyse serrée selon une maille de l'ordre du millimètre, car elle provoque alors, entre autres inconvénients, une perte excessive de lumière ; elle devient également vaine si l'on emploie des barrettes continues de photodiodes car leurs plages sensibles y occupent la quasi-totalité de la surface.

Il a d'autre part été proposé (Glass Technology, vol.22, no.3, juin 1981, pages 139-140, Huddersfield, GB; W. SANDERS: "Solid state optics for sidewall and dimensional inspection of glassware") d'employer pour récepteurs de certains appareils de contrôle des caméras linéaires. Selon l'invention, l'écran diffusant est encore disposé à proximité immédiate de l'objet, aussi près qu'il est raisonnablement possible de le faire pour, en particulier, éviter la trajectoire de celui-ci dans son mouvement de mise en place sur le dispositif puis d'évacuation, tandis que la rangée d'éléments photosensibles est formée d'une barrette continue de diodes appartenant à une caméra linéaire placée à distance de l'écran et dont l'objectif vise l'écran, sur lequel elle est mise au point avec la profondeur de champ désirée.

Ainsi, tout en s'inspirant du même principe, mais séparant les deux organes, l'invention permet d'obtenir très simplement une image plus fine du corps à vérifier car l'écran peut facilement être dessiné en fonction du profil de celui-ci pour le suivre au plus près et être rendu interchangeable, en particulier pour les changements de fabrications.

Il est alors possible pour des raisons d'opportunité telles que l'encombrement mais aussi pour améliorer la sensibilité, de disposer obliquement par rapport au plan de symétrie les divers organes optiques.

En pratique, un récepteur courant, caméra combinant un objectif classique et un organe photosensible constitué d'une simple barrette rectiligne de diodes, de préférence orientable, convient pour observer avec la finesse désirée l'image fournie par l'ensemble des régions à examiner.

Avantageusement, il sera doté d'un miroir de renvoi permettant de l'orienter de façon à pouvoir le placer à la distance d'observation voulue pour couvrir toute la hauteur à contrôler sans créer un encombrement latéral excessif.

L'écran pourra n'être constitué que d'une plaquette plane, translucide, étroite, feuille de matière opale ou de verre dépoli sur sa face avant mais, au besoin, il pourra aussi comprendre une juxtaposition de facettes orientées selon une disposition en principe prismatique le long du profil de la trajectoire considérée, ou mieux alors avoir une surface courbe, à savoir celle d'une section droite ou du moins peu oblique, verticale ou non, d'un cylindre d'axe perpendiculaire au plan de symétrie : il suivra ainsi la forme de l'article, auquel sa distance ira de préférence de 0,3 à 1 centimètre, restant suffisamment constante sans toutefois qu'une sinuosité excessive crée de difficultés, soit de construction, soit encore d'observation de l'objet quant aux angles d'éclairement ou de visée sinon à la profondeur de champ. Plus cet écran sera mince, meilleures seront la finesse et la sensibilité d'analyse.
en tant qu'émetteur, il peut parfois suffire d'une simple source lumineuse concentrée, diaphragmée ou anamorphosée en un faisceau mince. Cependant on emploiera de préférence un projecteur utilisant un système optique à source ponctuelle ou linéaire, émettant un faisceau étroit, diaphragmé en principe en un faisceau plat de façon à éclairer les segments d'examen choisis en passant par l'axe de symétrie de l'article ou du moins à son voisinage ; au besoin même, afin de permettre à l'écran de retransmettre vers le récepteur un flux lumineux suffisamment uniforme, on pourra associer plusieurs de ces projecteurs, chacun éclairant son tronçon propre sous une intensité réglable, avec un recouvrement éventuel des plages d'éclairement successives, pour engendrer un champ lumineux uniforme ou même corriger l'influence des écarts angulaires. Cet émetteur pourra lui aussi être équipé d'un système optique à miroir de renvoi.

Comme il a été indiqué plus haut, les positions des organes pourront s'écarter du plan de symétrie précité, récepteur et émetteur réglables et mis au point sur l'écran selon des plans moyens d'observation et d'éclairement correspondant à des sections principales voisines mais différentes, l'un et l'autre en principe parallèles à l'axe de l'article en position de contrôle ou peu inclinés sur lui.

Deux exemples de contrôle de verres seront décrits ci-dessous de façon plus détaillée, en référence aux dessins, qui montrent :
- figures 1 et 2, respectivement en plan et en élévation, un contrôle effectué dans un plan axial,
- figures 3 et 4, de la même façon, un mode un peu différent.
- figure 5, un détail du projecteur utilisé dans le second cas.

Dans ces deux exemples, le dispositif est monté sur une machine de type classique : l'article y repose sur une platine horizontale 1 ; son axe 2 est donc vertical et il se trouve entraîné par une roue en étoile 3 porteuse de galets 4 qui permettent à un contre-galet extérieur 5 de le faire tourner au poste de contrôle. Il s'agit d'une disposition usuelle, choisie par commodité et qu'il est inutile de décrire en détail.

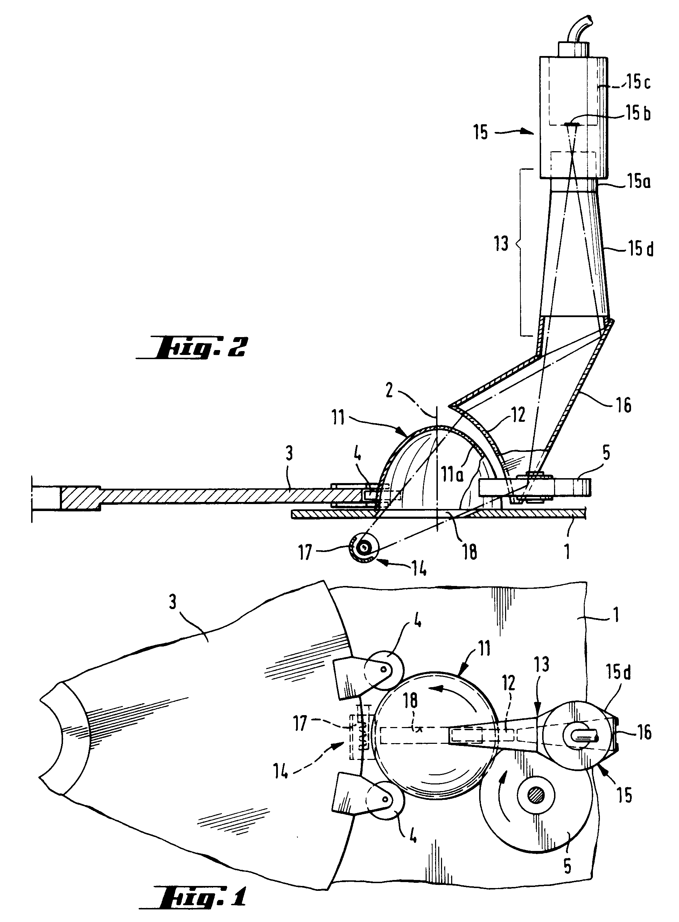

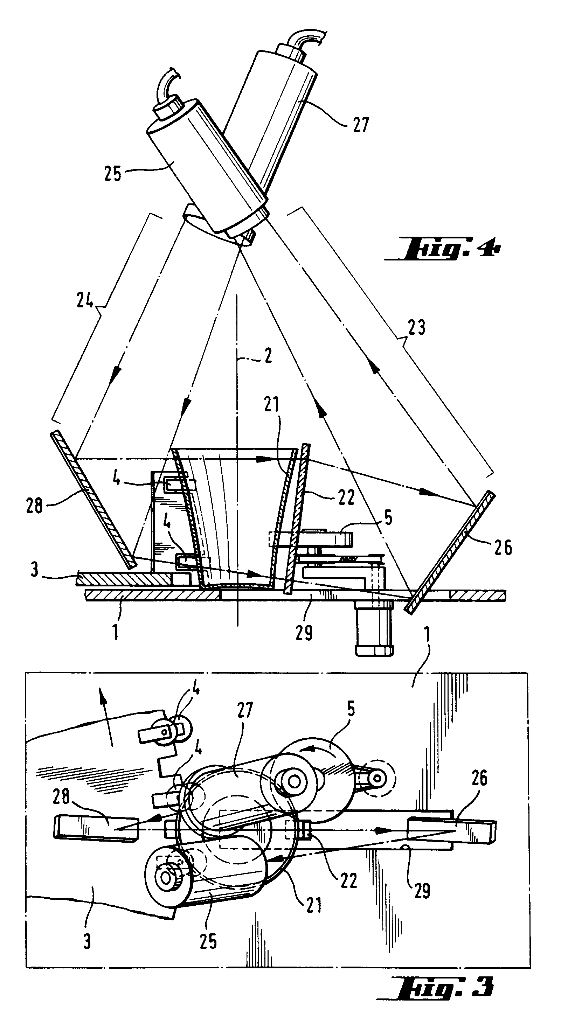

Le premier cas correspond au contrôle de la coupe 11, de forme ellipsoïdale, d'un verre à pied ; cette coupe repose sur la platine 1 par son buvant. L'ensemble de l'appareil est disposé le long du plan de la figure 2, lequel passe par l'axe de la roue en étoile 3 ; l'écran 12, le récepteur 13 et l'émetteur 14 sont symétriques par rapport à ce plan.

L'écran 12, formé d'une étroite et mince plaquette de matière plastique opale, translucide, cintrée cylindriquement, est disposé transversalement au plan de symétrie, le long de la génératrice principale ou méridienne extérieure 11a de l'article en position de contrôle, sans d'ailleurs suivre exactement sa courbure.

Le récepteur 13 comprend une caméra 15 dont l'objectif 15a est placé devant une barrette rectiligne 15b de diodes photosensibles reliée à un préamplificateur 15c. Cet ensemble se trouve à l'intérieur d'un boîtier 15d porteur d'un miroir de renvoi 16 qui, tourné vers la face arrière de l'écran, permet d'orienter verticalement l'objectif pour réduire l'encombrement horizontal et, le mettant au point sur cet écran, d'y définir dans le plan de la figure 2 un segment d'examen qui va du buvant au voisinage de l'apex de la coupe.

L'émetteur 14 est formé d'une simple lampe 17 munie d'un réflecteur, et placé vers l'intérieur de la machine, sous la platine de référence, où une fente rectiligne 18 diaphragme sa lumière en un faisceau de faible épaisseur formant sur l'écran, à cheval sur le plan médian, une zone lumineuse qui recouvre le segment d'examen : en présence d'un article, une seule paroi est traversée; d'éventuels défauts du verre se traduiront par des variations locales d'éclairement. Celles-ci, détectées par l'appareil, signaleront ces défauts et, le cas échéant, un organe convenablement temporisé permettra ensuite d'écarter l'article.

Le second cas a trait au contrôle d'un verre 21 de forme générale tronconique avec une légère courbure des génératrices principales, placé debout.

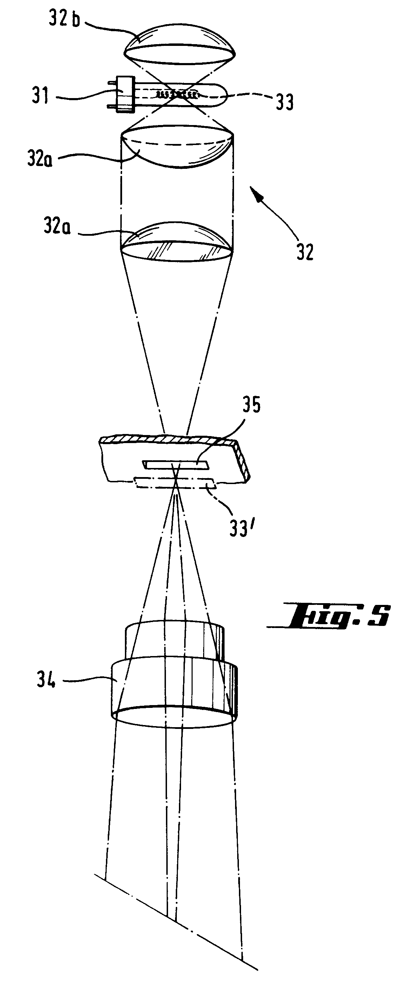

L'écran translucide est ici formé d'une plaquette de verre plane 22, dépolie sur sa face avant, tournée vers l'article, longeant d'assez près, perpendiculairement au plan de la figure 4, la génératrice principale correspondante.

Par rapport au plan de la figure 4, qui passe encore par l'axe de la roue en étoile 3, l'ensemble de l'appareil ne présente cependant plus une symétrie totale : récepteur 23 et émetteur 24 se trouvent en effet placés côte à côte au dessus de la trajectoire de l'article.

Le récepteur 23, tout à fait semblable au précédent, a sa caméra 25 dirigée de haut en bas vers un miroir de renvoi 26 incliné à 40 ° environ sur la verticale ceci, comme le montre la figure 3, dans une disposition transversale très légèrement oblique, ce qui permet de le mettre au point sur l'écran le long de la génératrice la plus proche en orientant convenablement la barrette de diodes.

L'émetteur 24 comprend un projecteur 27 dirigé de haut en bas vers un étroit miroir de renvoi 28 lui aussi légèrement déporté, et incliné à 40 ° environ sur la verticale de façon à replier le faisceau illuminant l'écran dans une direction légèrement plongeante ; comme pour le récepteur, cette disposition permet de placer le projecteur à distance suffisante sans encombrement horizontal excessif, le faisceau traversant successivement les deux parois pour éclairer dans une zone étroite l'ensemble de la hauteur de la seconde d'entre elles tout en évitant les bords supérieurs, sources de signaux parasites.

Une fente 29 est pratiquée dans la platine 1 pour permettre le passage des rayons lumineux.

Le projecteur, de structure classique, possède une lampe 31 et un condenseur 32 formé de deux lentilles 32a, associées couramment à un miroir concave 32b, pour former a faible distance l'image 33ʹ de son filament 33 ; la lumière est reprise par un objectif 34.

La source n'étant pas ponctuelle, le miroir 28, en dépit d'une forme étroite, ne diaphragmerait qu'imparfaitement en un faisceau plat le faisceau émis par le projecteur ; c'est pourquoi il est indiqué de régler l'objectif 34 sur un diaphragme de champ porteur d'une fente 35, de 0,7 mm sur 15 mm par exemple, placé au voisinage de l'image 33ʹ mais légèrement défocalisé pour que s'en forme dans la région de l'écran 22, en l'absence d'article, une image rectangulaire étroite, quinze à vingt fois plus grande, de luminosité pratiquement homogène.

On notera qu'il serait aussi possible d'analyser de même le fond de l'article. Enfin on comprend aisément que dans cette disposition oblique des organes et dès que leurs plans de sections principales diffèrent bien qu'ils se coupent au voisinage de l'écran, il devient facile de placer le récepteur hors du champ direct de l'émetteur : même bénéficiant de la diffusion créée par l'écran, on améliore ainsi la sensibilité en réduisant l'éblouissement.

## Revendications

1. Dispositif de contrôle optique de corps (11,21) transparents,
- comprenant, outre des organes de présentation du corps au poste de contrôle :
· un récepteur (13,23) associant une rangée d'éléments photosensibles à un écran diffusant (12,22), translucide, placé en regard de la position du corps et à proximité immédiate de celui-ci,
· un émetteur (14,24) de lumière fixe engendrant un faisceau lumineux peu épais traversant le corps pour éclairer sur l'écran une zone étroite couvrant le ou les segments d'examen choisis,
- caractérisé en ce que la rangée d'éléments photosensibles est formée d'une barrette continue de diodes (15b) appartenant à une caméra linéaire (15) placée à distance de l'écran et dont l'objectif (15a) vise cet écran.

2. Dispositif de contrôle selon la revendication 1, caractérisé en ce que la caméra linéaire combine un objectif classique et une barrette de diodes rectiligne mais orientable.

3. Dispositif de contrôle selon la revendication 1, caractérisé en ce que l'écran possède une surface courbe, le long du profil de la trajectoire de l'article (11,21).

4. Dispositif de contrôle selon la revendication 1, caractérisé en ce que l'émetteur comprend un projecteur utilisant un système optique (32) à source (31) ponctuelle ou linéaire, émettant un faisceau étroit, diaphragmé (35) en un faisceau plat passant par l'axe de symétrie du corps ou du moins à son voisinage.

5. Dispositif de contrôle selon l'une des revendications 1 à 4, caractérisé en ce que ses organes optiques sont dotés d'au moins un miroir de renvoi (16,26,27).

6. Dispositif de contrôle selon l'une des revendications 1 à 5, caractérisé en ce que ses organes optiques sont disposés obliquement.

7. Dispositif de contrôle selon la revendication 6, caractérisé en ce que le récepteur se trouve hors du champ direct de l'émetteur.

8. Dispositif de contrôle selon la revendication 7, caractérisé en ce que l'émetteur et le récepteur possèdent des plans de sections principales distincts, quoique voisins du plan de symétrie du poste.

## Claims

1. Optical monitoring device for transparent objects (11, 21),
· comprising, in addition to the elements for presenting the object at the monitoring station;
· a receiver (13, 23) associating a row of photosensitive elements with a translucent diffusing screen (12, 22) placed opposite the position of the object and in immediate proximity to it,
· a fixed light emitter (14, 24), creating a thin light beam passing through the object to illuminate, on the screen, a narrow zone covering the inspection segment or segments chosen,
· characterized in that the row of photosensitive elements is formed of a continuous bar of diodes (15b) belonging to a linear camera (15) disposed at a distance from the screen, and the object lens (15a) of which is aimed at this screen.

2. Monitoring device according to Claim 1, characterized in that the linear camera combines a conventional object lens and a rectilinear, but orientable, bar of diodes.

3. Monitoring device according to Claim 1, characterized in that the screen has a curved surface, along the profile of the trajectory of the object (11, 21).

4. Monitoring device according to Claim 1, characterized in that the emitter comprises a projector using an optical system (32) having a punctiform or linear source (31), emitting a narrow beam stopped down (35) into a flat beam passing through the axis of symmetry of the object or at least in its vicinity.

5. Monitoring device according to one of Claims 1 to 4, characterized in that its optical elements are equipped with at least one return mirror (16, 26, 27).

6. Monitoring device according to one of Claims 1 to 5, characterized in that its optical elements are disposed obliquely.

7. Monitoring device according to Claim 6, characterized in that the receiver is situated outside the direct field of the emitter.

8. Monitoring device according to Claim 7, characterized in that the emitter and the receiver have principal section planes that are distinct, although adjacent to the plane of symmetry of the station.

## Patentansprüche

1. Vorrichtung zur optischen Überwachung transparenter Körper (11, 21), umfassend neben Vorrichtungen zur Darstellung des Körpers am Überwachungsplatz:
- einen Empfänger (13, 23) mit einer Reihe lichtempfindlicher Elemente an einem durchscheinenden Streuschirm (12, 22), der gegenüber der Position des Körpers und in dessen unmittelbarer Nähe angeordnet ist,
- eine feste Lichtquelle (15, 24), die einen schmalen Lichtkegel erzeugt, der den Körper durchquert, um auf dem Schirm einen schmalen Bereich zu beleuchten, der das oder die ausgewählten Prüfsegmente überdeckt,
**dadurch gekennzeichnet,** daß
die Reihe der lichtempfindlichen Elemente durch eine Kappe mit zusammenhängenden Dioden (15b) gebildet ist, die Bestandteil einer in einem Abstand vom Schirm angeordneten Zeilenkamera (15) ist, deren Objektiv (15a) auf den Schirm gerichtet ist.

2. Überwachungsvorrichtung nach Anspruch 1,
**dadurch gekennzeichnet,** daß die Zeilenkamera mit einem herkömmlichen Objektiv und einer Kappe mit geradlinigen, aber einstellbaren Dioden zusammenwirkt.

3. Überwachungsvorrichtung nach Anspruch 1,
**dadurch gekennzeichnet,** daß der Schirm eine gekrümmte Fläche über die Länge des Profils der Bahn des Körpers (11, 21) aufweist.

4. Überwachungsvorrichtung nach Anspruch 1,
**dadurch gekennzeichnet,** daß der Sender einen Projektor umfaßt, der ein optisches System (32) mit einer punktuellen oder linearen Quelle (31), die ein schmales Bündel ausstrahlt, und eine Blende (35), die ein ebenes Bündel in der Symmetrieachse des Körpers oder wenigstens in seiner Nachbarschaft durchläßt, verwendet.

5. Überwachungsvorrichtung nach einem der Ansprüche 1 bis 4,
**dadurch gekennzeichnet,** daß ihre optischen Vorrichtungen mit wenigstens einem Rückstrahlspiegel (16, 26, 27) ausgestattet sind.

6. Überwachungsvorrichtung nach einem der Ansprüche 1 bis 5,
**dadurch gekennzeichnet,** daß die optischen Vorrichtungen schräg angeordnet sind.

7. Überwachungsvorrichtung nach Anspruch 6,
**dadurch gekennzeichnet,** daß der Empfänger sich außerhalb des direkten Gesichtsfeldes des Senders befindet.

8. Überwachungsvorrichtung nach Anspruch 7,
**dadurch gekennzeichnet,** daß der Sender und der Empfänger, obgleich benachbart der Symmetrieebene des (Über-wachungs-)Platzes, verschiedene Hauptschnittebenen auf-weisen.
